# EUROPÄISCHE PATENTSCHRIFT

(11) **EP 3 786 745 B1**
(45) Veröffentlichungstag und Bekanntmachung des Hinweises auf die Patenterteilung: **22.02.2023**
(21) Anmeldenummer: 19194040.2
(22) Anmeldetag: 28.08.2019
(51) Int. Cl.: G05B 23/02

(54) **IDENTIFIKATION VON ABWEICHUNGEN ZWISCHEN REALER ANLAGE UND IHREM DIGITALEN ZWILLING**
IDENTIFICATION OF DEVIATIONS BETWEEN AN ACTUAL SYSTEM AND A DIGITAL TWIN
IDENTIFICATION DES ÉCARTS ENTRE UNE INSTALLATION RÉELLE ET SON DOUBLE NUMÉRIQUE

(43) Veröffentlichungstag der Anmeldung: 03.03.2021
(73) Patentinhaber: Siemens Aktiengesellschaft, 80333 München (DE)
(72) Erfinder: Baudisch, Thomas, 86938 Schondorf am Ammersee (DE); Metzner, Maximilian, 96047 Bamberg (DE); Montrone, Francesco, 85521 Riemerling (DE); Peschke, Jörn, 90489 Nürnberg (DE); Rossgoderer, Ulrich, 81539 München (DE)

(56) Entgegenhaltungen:
- EP-A2- 2 400 282
- JP-A- 2010 025 724
- US-A1- 2004 176 116

## Beschreibung

Die vorliegende Erfindung betrifft ein Verfahren und eine Vorrichtung zum Ermitteln von Abweichungen zwischen einer automatisierten Anlage und einem digitalen Zwilling der automatisierten Anlage, sowie eine automatisierte Anlage umfassend die Vorrichtung.

### Stand der Technik

Die Automatisierungstechnik betrifft insbesondere den Anlagenbau im Bereich des Maschinenbaus und der Elektrotechnik. Sie wird eingesetzt, um technische Vorgänge in Maschinen, Anlagen oder technischen Systemen zu automatisieren und somit automatisierte Anlage zu schaffen. Dazu kommen verschiedenen Aktoren in einer automatisierten Anlage zum Einsatz, die einen Prozess (z. B. Fertigungsprozess oder Verfahren) durchführen. Die Aktoren werden von einer Steuerung der automatisierten Anlage gesteuert, wobei die Steuerung durch Sensoren Informationen über den Prozess bzw. den Anlagenzustand erhält.

Der Automatisierungsgrad einer automatisierten Anlage ist umso höher, je unabhängiger die automatisierte Anlagen von menschlichen Eingriffen ist. Die Automatisierung dient neben der Entlastung des Menschen von gefährlichen, anstrengenden oder Routine-Tätigkeiten der Qualitätsverbesserung und steigert die Leistungsfähigkeit der automatisierten Anlage. Zudem können durch Automatisierung Personalkosten gesenkt werden. Dabei werden menschliche Tätigkeiten vorwiegend auf die Beseitigung von Störungen, den Materialnachschub, den Fertigteilabtransport, die Wartung und ähnliche Arbeiten reduziert.

Entwurf, Implementierung von Automatisierungsfunktionen und Inbetriebnahme von automatisierten Anlagen sind stark methodenorientiert. Entwickelte Methoden und Lösungen sind meist das Ergebnis einer (abstrahierenden) Modellbetrachtung realer physikalischer Systeme (automatisierte Anlagen). Dabei werden die physikalischen Systeme häufig mittels eines rechnergestützten virtuellen Abbilds oder Modells, eines sogenannten digitalen Zwillings, modelliert. Auf der Grundlage dieser digitalen Zwillinge können dann wissensbasierte Methoden zum Entwurf und zur Inbetriebnahme der verschiedenen Automatisierungsfunktionen entwickelt werden. Mit wissensbasierten Ansätzen entstehen dann zum Beispiel automatisierte Anlagen, die modellgestützte Regelungen und Steuerungen enthalten.

Das Design einer Produktionsanlage erfolgt demnach mit Hilfe eines digitalen Zwillings. Bei der Umsetzung des digitalen Zwillings in die reale automatisierte Anlage können Abweichungen auftreten. Diese Abweichungen können sich beispielsweise aus örtlichen Gegebenheiten oder ungenauen Montagevorgaben ergeben. Auch Erweiterungen und Umbauten der realen Anlage ohne (manuelles) Update des digitalen Zwillings führen zu Abweichungen zwischen dem digitalen Zwilling und der realen automatisierten Anlage. Auch wenn zum Zeitpunkt der Inbetriebnahme der automatisierten Anlage ein Digitaler Zwilling der Fertigungsanlage existiert, der mit der realen automatisierten Anlage abgeglichen ist, können im Laufe des Betriebs der realen automatisierten Anlage Veränderungen (z. B. Optimierungen, Komponenten werden hinzugenommen/entfernt) an der realen automatisierten Anlage vorgenommen werden. Somit ist nach einiger Zeit im Betrieb nicht mehr bekannt bzw. nachvollziehbar in wieweit der Digitale Zwilling die reale Anlage noch korrekt abbildet.

Dies führt zu einem beträchtlichen manuellen Aufwand. Beispielsweise muss ein Simulationsexperte durch Begehung vor Ort und/oder durch Gespräche mit dem Anlagenbetreiber die Konsistenz zwischen der realen automatisierten Anlage und dem digitalen Zwilling klären.

Weiter ist es möglich, einen dreidimensionalen (3D) Scan der realen automatisierten Anlage mittels eines Laserscanners, Drohnenüberflug oder im Raum angebrachter Kameras zu erstellen. Aus dem 3D Scan kann ein zweidimensionales (2D) oder 3D CAD Modell der realen automatisierten Anlage berechnet werden. Diese Modelle können mit 2D/3D CAD-Modellen (z. B. Anlagenlayout), die mit dem digitalen Zwilling übereinstimmen, manuell von dem Simulationsexperten verglichen werden. Ferner ist es möglich, Aufnahmen von realen Bewegungen von Komponenten der automatisierten Anlage mittels Videokamera anzufertigen. Es kann dann eine Identifikation der Bewegungen durch Bilderkennung im digitalen Zwilling erfolgen. In beiden zuvor genannten Fällen besteht das Problem, dass die Elemente der automatisierten Anlage oft eine Arbeitsraumverkleidung haben und/oder bestimmte Bereiche nicht von außen zugänglich sind, sodass nicht "in die Elemente" geblickt und die genaue Anordnung bzw. der Ablauf beobachtet werden kann.

Die Druckschrift US 2004/0176116A1 - Berkooz et al. "METHOD FOR ISOLATING SOURCES OF DRIFTS IN OUTPUT PROPERTIES FOR MACHINES AND PROCESSES" zeigt die Fehleranalyse für einen industriellen Prozess oder Anordnung, wobei tatsächliche Messwerte mit virtuellen Messwerten aus einer Simulation in Bezug gesetzt werden und Abweichungen festgestellt werden, aus denen auf die Fehlerursache geschlossen wird.

Die Publikation EP 2 400 282 A2 - Batmaz et al. "Methods and systems for measurement and control of process parameters" zeigt das Mitführen eines Sensors durch eine prozesstechnische Anlage.

### Zusammenfassung der Erfindung

Die Aufgabe der vorliegenden Erfindung ist es diese Probleme zu Lösen oder wenigstens zu lindern, indem ein Verfahren zum Ermitteln von Abweichungen zwischen einer automatisierten Anlage und einem digitalen Zwilling der automatisierten Anlage gemäß dem unabhängigen Anspruch 1 und eine Vorrichtung zum Ermitteln von Abweichungen zwischen einer automatisierten Anlage und einem digitalen Zwilling der automatisierten Anlage, sowie eine automatisierte Anlage umfassend die Vorrichtung gemäß den weiteren unabhängigen Ansprüchen bereitgestellt werden. Vorteilhafte Ausgestaltungen und Weiterbildungen sind Gegenstand der jeweils abhängigen Ansprüche.

Gemäß einem ersten Aspekt der vorliegenden Erfindung umfasst ein Verfahren zum Ermitteln von Abweichungen zwischen einer automatisierten Anlage und einem digitalen Zwilling der automatisierten Anlage die Schritte:
a) Befestigen einer Sensoreinheit an einem Prozessgut.
b) Kontinuierliches aufzeichnen wenigstens einer Messgröße durch die Sensoreinheit, während das Prozessgut mit der befestigten Sensoreinheit von der automatisierten Anlage prozessiert wird.
c) Vergleichen eines zeitlichen Verlaufs der wenigstens einen aufgezeichneten Messgröße mit einem zeitlichen Verlauf wenigstens einer entsprechenden simulierten Messgrö-ße, die mit dem digitalen Zwilling simuliert wurde.
d) Identifizieren eines Orts in der automatisierten Anlage, an dem eine Abweichung zwischen der wenigstens einen aufgezeichneten Messgröße und der wenigstens einen entsprechenden simulierten Messgröße besteht, falls der zeitliche Verlauf der wenigstens einen aufgezeichneten Messgrö-ße von dem zeitlichen Verlauf der wenigstens einen entsprechenden simulierten Messgröße abweicht.

Gemäß einem zweiten Aspekt der vorliegenden Erfindung ist eine Vorrichtung zum Ermitteln von Abweichungen zwischen einer automatisierten Anlage und einem digitalen Zwilling der automatisierten Anlage ausgebildet, das Verfahren gemäß dem ersten Aspekt der vorliegenden Erfindung auszuführen. Die Vorrichtung umfasst eine Sensoreinheit und eine Steuereinheit. Die Sensoreinheit ist ausgebildet, an einem Prozessgut befestigt zu werden. Die Sensoreinheit ist ferner ausgebildet, wenigstens eine Messgröße kontinuierlich aufzuzeichnen, während das Prozessgut mit der befestigten Sensoreinheit von der automatisierten Anlage prozessiert wird. Die Steuereinheit ist ausgebildet, einen zeitlichen Verlauf der wenigstens einen aufgezeichneten Messgröße mit einem zeitlichen Verlauf wenigstens einer entsprechenden simulierten Messgröße, die mit dem digitalen Zwilling simuliert wurde, zu vergleichen. Die Steuereinheit ist ferner ausgebildet, einen Ort in der automatisierten Anlage zu identifizieren, an dem eine Abweichung zwischen der wenigstens einen aufgezeichneten Messgröße und der wenigstens einen entsprechenden simulierten Messgröße besteht, falls der zeitliche Verlauf der wenigstens einen aufgezeichneten Messgröße von dem zeitlichen Verlauf der wenigstens einen entsprechenden simulierten Messgröße abweicht.

Gemäß einem dritten Aspekt der vorliegenden Erfindung umfasst eine automatisierte Anlage die Vorrichtung gemäß dem zweiten Aspekt der vorliegenden Erfindung.

Im Zusammenhang mit der vorliegenden Erfindung wird der Begriff "kontinuierlich" verstanden als zu vorbestimmten Zeitpunkten und insbesondere als jeweils nach einem vordefinierten Zeitintervall. Ein kontinuierlich ausgeführter Schritt wird demnach verstanden als ein Schritt, der zu bestimmten, vordefinierten Zeitpunkten oder jeweils nach Ablauf eines vordefinierten Zeitintervalls ausgeführt wird.

Das Prozessgut kann insbesondere Werkstück wie beispielsweise ein Rohling (z. B. Platine usw.) sein. Das Prozessgut kann auch ein Materialstrom wie beispielsweise ein kontinuierlicher Strom eines Materials in Pulverform sein.

Die Sensoreinheit kann an dem Prozessgut durch Kraftschluss, Formschluss und/oder Stoffschluss befestigt werden. Zudem kann die Sensoreinheit lösbar oder nicht lösbar an dem Prozessgut befestigt werden. Beispielsweise kann die Sensoreinheit ein magnetisches Befestigungsmittel (Permanentmagnet, Elektromagnet usw.) umfassen, mit welchem die Sensoreinheit an einem magnetischen Prozessgut (z. B. Block aus magnetischem Metall) lösbar befestigt wird. Die Sensoreinheit kann auch eine Klebestelle (z. B. Klebestreifen) umfassen und somit mittels einer Verklebung (je nach Art des Klebstoffs lösbar oder nichtlösbar) an dem Prozessgut angebracht werden. Auch kann eine Verschraubung zum Befestigen der Sensoreinheit an dem Prozessgut zum Einsatz kommen. Unter "befestigt" wird gemäß der vorliegenden Erfindung auch ein Einbringen der Sensoreinheit in den Materialstrom verstanden, sodass die Sensoreinheit mit dem Materialstrom mitgeführt bzw. gemeinsam mit diesem bewegt wird.

Die an dem Prozessgut befestigte Sensoreinheit zeichnet eine Messgröße kontinuierlich auf. Die Sensoreinheit ermittelt dabei kontinuierlich die Messgröße und speichert diese ab, sodass der zeitliche Verlauf der Messgröße, während das Prozessgut mit der befestigten Sensoreinheit von der automatisierten Anlage prozessiert wird, nach Beendigung des Prozessierens vorliegt. Dabei durchläuft die Sensoreinheit zusammen mit dem Prozessgut die automatisierte Anlage und kann dabei Prozessgrößen und Parameter, sowie die Anordnung von Elementen der automatisierten Anlage "von innen" beobachten. Somit können auch Prozesse und Anordnungen von Elementen der automatisierten Anlage, die von außen nicht erkennbar sind, von der Sensoreinheit in Form der kontinuierlich aufgezeichneten wenigstens einen Messgröße festgehalten werden.

Die Messgröße kann hierbei beispielsweise eine physikalische Größe (z. B. Temperatur, Druck, Beschleunigung, usw.), eine Position der Sensoreinheit in der automatisierten Anlage, während dieser die automatisierte Anlage durchläuft, und dergleichen sein. Dazu kann die Sensoreinheit über geeignete Sensorelemente bzw. Messfühler, mit denen die physikalischen Größen erfasst werden können, verfügen. Zudem kann die Sensoreinheit eine Speichereinheit, in der der zeitliche Verlauf, der wenigstens einen Messgröße zwischengespeichert werden kann, und/oder eine Kommunikationseinheit, mit der der zeitliche Verlauf der wenigstens einen Messgröße an die Steuereinheit gesendet werden kann, verfügen.

Der von der Sensoreinheit aufgezeichnete zeitliche Verlauf der wenigstens einen (realen) Messgröße wird mit dem zeitlichen Verlauf der wenigstens einen entsprechenden simulierten Messgröße verglichen. Der zeitliche Verlauf der wenigstens einen entsprechenden simulierten Messgröße wird mit dem digitalen Zwilling simuliert bzw. während der Simulation des Betriebs der automatisierten Anlage aus dem digitalen Zwilling ausgelesen. Der digitale Zwilling der automatisierten Anlage ist ein rechnergestütztes Simulationsmodell der automatisierten Anlage. Dieses besteht aus einer Hardware-in-the-loop (HiL) Simulation der realen automatisierten Anlage und kann eine Kopplung verschiedenster Simulationsmodelle umfassen (z. B. 3D Mechanik mit Kinematiksimulation und Sensor-/Aktorfunktionalität, detaillierte Physiksimulation mit Amesim usw.).

Zunächst wird überprüft, ob eine Abweichung zwischen dem zeitlichen Verlauf der aufgezeichneten wenigstens einen (realen) Messgröße und dem zeitlichen Verlauf der wenigstens einen entsprechenden simulierten Messgröße vorliegt. Dazu werden die aufgezeichneten Messwerte und die entsprechenden simulierten Messwerte zu jedem Zeitpunkt des zeitlichen Verlaufs miteinander verglichen. Durch Vergleich der Messwerte der realen und virtuellen Sensoreinheit können automatisch Differenzen im zeitlichen Verlauf der Messgrößen zwischen realer automatisierter Anlage und digitalem Zwilling erkannt werden. An diesen Stellen bzw. zu diesen Zeitpunkten liegen Abweichungen zwischen realer automatisierter Anlage und digitalem Zwilling vor.

Liegt eine Abweichung zwischen den zeitlichen Verläufen der wenigstens einen aufgezeichneten Messgröße und der wenigstens einen entsprechenden simulierten Messgröße vor, so wird der Ort identifiziert, an dem die Abweichung von dem digitalen Zwilling in der automatisierten Anlage auftritt. Dieser Ort kann beispielsweise über eine Laufzeit identifiziert werden. Dazu wird ermittelt, wie weit das Prozessgut mit der befestigten Sensoreinheit zu dem Zeitpunkt, an dem im zeitlichen Verlauf, der wenigstens einen aufgezeichneten Messgröße die Abweichung auftritt, in der automatisierten Anlage vorangekommen ist. Somit kann beispielsweise der Ort, an dem die Abweichung auftritt, bei konstanter Vorschubgeschwindigkeit des Prozessguts in der automatisierten Anlage über die Laufzeit bis zum Auftreten der Abweichung und die konstante Geschwindigkeit durch Multiplikation identifiziert werden.

Sobald der Ort, an dem die Abweichung auftritt, identifiziert wurde, kann an diesem Ort in der automatisierten Anlage nach dem Grund der Abweichung gesucht werden und entweder die automatisierte Anlage an den digitalen Zwilling angepasst werden oder umgekehrt.

Der digitale Zwilling kann auf einem separaten Computersystem implementiert sein und die Steuereinheit kann mit dem digitalen Zwilling kommunikativ über eine drahtlose oder drahtgebundene Schnittstelle verbunden sein. Alternativ können die Steuereinheit und der digitale Zwilling auf einem gemeinsamen Computersystem implementiert sein.

Mit der vorliegenden Erfindung kann zu jedem Zeitpunkt zuverlässig automatisch überprüft werden, ob reale automatisierte Anlage und der digitaler Zwilling zusammenpassen. Ferner kann, falls dies nicht der Fall ist, automatisch identifiziert werden, an welchen Stellen Abweichungen existieren, und diese entsprechend beseitigt werden. Dies reduziert den Aufwand und die Zeit, um besagte Abweichungen ausfindig zu machen und zu beseitigen.

Erfindungsgemäß umfasst das Verfahren ferner die Schritte:
i1) Modellieren einer virtuellen Sensoreinheit an einem virtuellen Prozessgut innerhalb des digitalen Zwillings.
i2) Simulieren der wenigstens einen entsprechenden Messgröße. Dabei wird die wenigstens eine entsprechende Messgröße durch die virtuelle Sensoreinheit aufgezeichnet, während das virtuelle Prozessgut mit der virtuellen Sensoreinheit von dem digitalen Zwilling prozessiert wird.

Gemäß einer weiteren Weiterbildung der vorliegenden Erfindung ist die Steuereinheit ausgebildet, mit dem digitalen Zwilling kommunikativ verbunden zu werden. Die Steuereinheit ist ferner ausgebildet, eine virtuelle Sensoreinheit an einem virtuellen Prozessgut innerhalb des digitalen Zwillings zu modellieren. Die Steuereinheit ist zudem ausgebildet, die wenigstens eine entsprechende Messgröße zu simulieren. Dabei wird die wenigstens eine entsprechende Messgröße durch die virtuelle Sensoreinheit aufgezeichnet, während das virtuelle Prozessgut mit der virtuellen Sensoreinheit von dem digitalen Zwilling prozessiert wird.

Der zeitliche Verlauf, der wenigstens einen entsprechenden simulierten Messgröße wird mit dem digitalen Zwilling dadurch simuliert, dass eine der realen Sensoreinheit entsprechende virtuelle Sensoreinheit in dem digitalen Zwilling modelliert wird. Die virtuelle Sensoreinheit wird analog zu der realen Sensoreinheit mit dem virtuellen Prozessgut, also mit anderen Worten "an dem virtuellen Prozessgut angebracht", durch den digitalen Zwilling befördert, sodass die virtuelle Sensoreinheit analog zu der realen Sensoreinheit den digitalen Zwilling durchläuft, während das digitale Prozessgut prozessiert wird. Dabei zeichnet die virtuelle Sensoreinheit kontinuierlich die wenigstens eine entsprechende simulierte Messgröße auf.

Durch die Simulation der wenigstens einen entsprechenden simulierten Messgröße mittels der virtuellen Sensoreinheit wird sichergestellt, dass die entsprechende simulierte Messgröße der realen Messgröße vollständig entspricht. Zudem bietet diese Art der Simulation eine besonders einfache und effiziente Art die wenigstens eine entsprechende simulierte Messgröße zu erzeugen.

Gemäß einer Weiterbildung der vorliegenden Erfindung wird wenigstens eine Position der Sensoreinheit als Messgröße durch die Sensoreinheit aufgezeichnet. Optional wird zusätzlich wenigstens eine virtuelle Position der virtuellen Sensoreinheit als entsprechende simulierte Messgröße durch die virtuelle Sensoreinheit aufgezeichnet. Dabei wird der Ort, an dem eine Abweichung zwischen der wenigstens einen aufgezeichneten Messgröße und der wenigstens einen entsprechenden simulierten Messgröße auftritt, durch Auswerten einer Spur der Sensoreinheit basierend auf der aufgezeichneten Position identifiziert. Optional wird der Ort, an dem eine Abweichung zwischen der wenigstens einen aufgezeichneten Messgröße und der wenigstens einen entsprechenden simulierten Messgröße auftritt, durch Auswerten der Spur der Sensoreinheit basierend auf der aufgezeichneten Position und einer virtuellen Spur der virtuellen Sensoreinheit basierend auf der simulierten virtuellen Position identifiziert.

Gemäß einer weiteren Weiterbildung der vorliegenden Erfindung ist die Sensoreinheit ausgebildet, eine Position der Sensoreinheit als Messgröße aufzuzeichnen.

Die Sensoreinheit erfasst ihre Position in der automatisierten Anlage, während sie diese beim Prozessieren des Prozessguts, an dem sie angebracht ist, passiert. Die Sensoreinheit kann dazu einen GPS-Sensor und/oder wenigstens einen Beschleunigungssensor, aus dessen erfassten Beschleunigungswerten der zeitliche Verlauf der Position abgeleitet wird, und/oder optische Sensorelemente (z. B. Kamera, optische Marker usw.) umfassen.

Der zeitliche Verlauf der Position ergibt eine (reale) Spur der (realen) Sensoreinheit entlang der automatisierten Anlage. Analog kann optional der virtuelle Sensor dessen virtuelle Position im digitalen Zwilling aufzeichnen. Der zeitliche Verlauf der virtuellen Position ergibt eine virtuelle Spur der virtuellen Sensoreinheit entlang des digitalen Zwillings.

Aus der (realen) Spur kann der Ort, an dem eine Abweichung zwischen der wenigstens einen aufgezeichneten Messgröße, also hier der Position der (realen Sensoreinheit), und der wenigstens einen entsprechenden simulierten Messgröße, also hier einer simulierten Position, besteht, abgeleitet werden. Dazu wird verglichen, zu welchem Zeitpunkt im zeitlichen Verlauf die aufgezeichnete (reale) Position nicht mit der entsprechenden simulierten Messgröße bzw. der simulierten Position übereinstimmt.

Wenn auch die virtuelle Sensoreinheit zum Einsatz kommt und somit die virtuelle Position der virtuellen Sensoreinheit und daraus abgeleitet die virtuelle Spur simuliert werden, dann wird die reale Spur mit der virtuellen Spur verglichen, um den Ort, an dem die Abweichung in der Position der realen Sensoreinheit von der virtuellen Position der virtuellen Sensoreinheit auftritt, zu identifizieren. Dazu kann eine Vergleichsfunktion der beiden Spuren zum Einsatz kommen.

Durch den Vergleich der Position bzw. der Spur der realen Sensoreinheit mit der simulierten Position bzw. der virtuellen Spur der virtuellen Sensoreinheit können Abweichungen in der Anordnung von Elementen der automatisierten Anlage gegenüber den entsprechenden Elementen in dem digitalen Zwilling automatisch erkannt und deren Ort automatisch identifiziert werden.

Gemäß einer Weiterbildung der vorliegenden Erfindung erfolgen die Schritte b) i2) und c) gleichzeitig in Echtzeit.

Gemäß einer weiteren Weiterbildung ist die Sensoreinheit mit der Steuereinheit kommunikativ verbunden. Die Sensoreinheit ist ferner ausgebildet, die wenigstens eine aufgezeichnete physikalische Größe in Echtzeit an die Steuereinheit zu übertragen.

Wenn das Prozessgut mit der angebrachten Sensoreinheit der automatisierten Anlage zugeführt wird, wird zeitgleich die Simulation mit dem digitalen Zwilling gestartet, sodass die virtuelle Sensoreinheit den digitalen Zwilling synchron wie die (reale) Sensoreinheit die automatisierte Anlage durchfährt. Dabei müssen die (reale) Sensoreinheit und die virtuelle Sensoreinheit zeitgleich den Durchlauf starten, jedoch kann der Durchlauf der (realen) Sensoreinheit und der virtuellen Sensoreinheit zu verschiedenen Zeitpunkten enden, sofern eine Abweichung zwischen realer automatisierter Anlage und digitalem Zwilling besteht.

Der wenigstens eine aufgezeichnete Messwert (hier z. B. die Position und/oder wenigstens eine weitere physikalische Grö-ße) und/oder dessen zeitlicher Verlauf (hier z. B. die Spur und/oder ein zeitlicher Verlauf der wenigstens einen weiteren physikalischen Größe) können zusammen mit dem wenigstens einen entsprechenden simulierten Messwert (hier z. B. die virtuelle Position und/oder wenigstens eine weitere entsprechende simulierte physikalische Größe) und/oder dessen zeitlicher Verlauf (hier z. B. die virtuelle Spur und/oder ein zeitlicher Verlauf der wenigstens einen weiteren entsprechende simulierten physikalischen Größe) einem Nutzer (z. B. Simulationsexperte) in Echtzeit auf einem Anzeigegerät (z. B. Monitor) angezeigt werden.

Der zeitliche Verlauf des wenigstens einen aufgezeichneten Messwerts und des wenigstens einen entsprechenden simulierten Messwerts werden zeitgleich mit dem Durchlauf der Sensoreinheit und der virtuellen Sensoreinheit durch die automatisierte Anlage bzw. durch den digitalen Zwilling verglichen. Dabei können Abweichungen und deren Ort in der automatisierten Anlage und/oder dem digitalen Zwilling in Echtzeit dem Nutzer an dem Anzeigegerät angezeigt werden.

Dadurch ist eine sofortige Analyse von Abweichungen der automatisierten Anlage von ihrem digitalen Zwilling möglich, was zu einem besonders schnellen Erkennen und damit Beheben der Abweichungen beiträgt. Zudem kann der Nutzer (Simulationsexperte) sofort feststellen, ob der zeitliche Verlauf für jeden Ort realistisch ist.

Gemäß einer Weiterbildung der vorliegenden Erfindung zeichnet die Sensoreinheit als Messgröße und optional die virtuelle Sensoreinheit als entsprechende simulierte Messgröße eine Temperatur, einen Druck, eine Beschleunigung, eine Geschwindigkeit, eine Lichtintensität, einen Schalldruck und/oder ein Bild auf.

Gemäß einer weiteren Weiterbildung ist die Sensoreinheit ausgebildet, eine Temperatur, einen Druck, eine Beschleunigung, eine Geschwindigkeit, eine Lichtintensität, einen Schalldruck und/oder ein Bild als Messgröße aufzuzeichnen.

Die Qualität des Vergleichs zwischen der realen automatisierten Anlage und dem digitalen Zwilling kann weiter verbessert werden, indem mehrere Messgrößen (neben der Position) erfasst werden. Im digitalen Zwilling können an bestimmten Orten besondere Charakteristika identifiziert werden. Beispielsweise wenn es eine Fräsbearbeitung an einem Ort in der automatisierten Anlage und dem digitalen Zwilling gibt, ist über die Simulationsparameter des digitalen Zwillings (z. B. Anzahl Schneiden und die Fräserdrehzahl) eine charakteristische Frequenz ermittelbar. Diese kann als Erwartungswert für diesen Ort hinterlegt werden. Weicht die Frequenz des real aufgezeichneten Schalldrucks an dieser Stelle ab, so kann auf eine Abweichung an diesem Ort geschlossen werden (z. B. Fräsbearbeitung an anderen Ort in der automatisierten Anlage verlegt) .

Somit wird die Aussagekraft und Präzision der Identifikation von Orten, an denen eine Abweichung existiert, erhöht.

Erfindungsgemäß umfasst das Verfahren ferner die primären Schritte:
j1) Modellieren einer virtuellen Sensoreinheit an einem virtuellen Prozessgut innerhalb des digitalen Zwillings. Dabei weist die virtuelle Sensoreinheit eine parametrierbare Sensorgeometrie auf, die eine relative Position einer Stelle, an der eine physikalische Größe durch die Sensorgeometrie erfasst wurde, aufzeichnet.
j2) Simulieren der wenigstens einen entsprechenden Messgröße, wobei die wenigstens eine entsprechende Messgröße und die relative Position durch die virtuelle Sensoreinheit mit parametrierbarer Sensorgeometrie aufgezeichnet werden, während das virtuelle Prozessgut mit der virtuellen Sensoreinheit von dem digitalen Zwilling prozessiert wird.
j3) Bereitstellen der Sensoreinheit gemäß der aufgezeichneten relativen Positionen.

Erfindungsgemäß wurde die Sensoreinheit gemäß den Schritten j1) bis j3) bereitgestellt.

Um die virtuelle Sensoreinheit wird in der Simulation eine parametrierbare Sensorgeometrie gelegt. Aufgabe der Sensorgeometrie ist es, in bei der Simulation mit dem digitalen Zwilling alle Elemente und/oder deren physikalische Größen zu erkennen, die die Sensorgeometrie beim Durchlaufen berühren bzw. deren physikalische Größen an einer Stelle der Sensorgeometrie erfasst werden (z. B. Linie für einen Lichtstrahl einer Lichtschranke). Die resultierenden Stellen, an denen die Elemente die Sensorgeometrie berühren und/oder an denen die physikalischen Größen erkannt werden, werden parallel zu den jeweiligen physikalischen Größen aufgezeichnet.

Die reale Sensoreinheit wird gemäß den aufgezeichneten Stellen so aufgebaut und bereitgestellt, dass die in der Simulation erkannten physikalischen Größen mit der realen Sensoreinheit in der realen automatisierten Anlage aufgenommen werden können müssten. Somit kann dann versucht werden an der realen Sensoreinheit beispielsweise ein Lichtsignal einer Lichtschranke auf einer bestimmten Höhe zu erkennen.

Auf diese Weise kann eine optimal designte reale Sensoreinheit zum Aufzeichnen der gewünschten Messgrößen bereitgestellt werden. Dies erhöht die Zuverlässigkeit und Präzision der Identifikation von Abweichungen zwischen der automatisierten Anlage und dem digitalen Zwilling.

Die Erfindung sowie das technische Umfeld werden nachfolgend anhand der Figuren näher erläutert. Es wird darauf hingewiesen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere wird darauf hingewiesen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können.
- Fig. 1: zeigt ein schematisches Ablaufdiagramm des Verfahrens zum Ermitteln von Abweichungen zwischen einer automatisierten Anlage und einem digitalen Zwilling der automatisierten Anlage.
- Fig. 2: zeigt eine schematische Darstellung einer realen Spur entlang einer automatisierten Anlage und einer virtuellen Spur entlang eines digitalen Zwillings der automatisierten Anlage.
- Fig. 3: zeigt eine schematische Ansicht der automatisierten Anlage mit der Vorrichtung zum Ermitteln von Abweichungen zwischen der automatisierten Anlage und einem digitalen Zwilling der automatisierten Anlage.

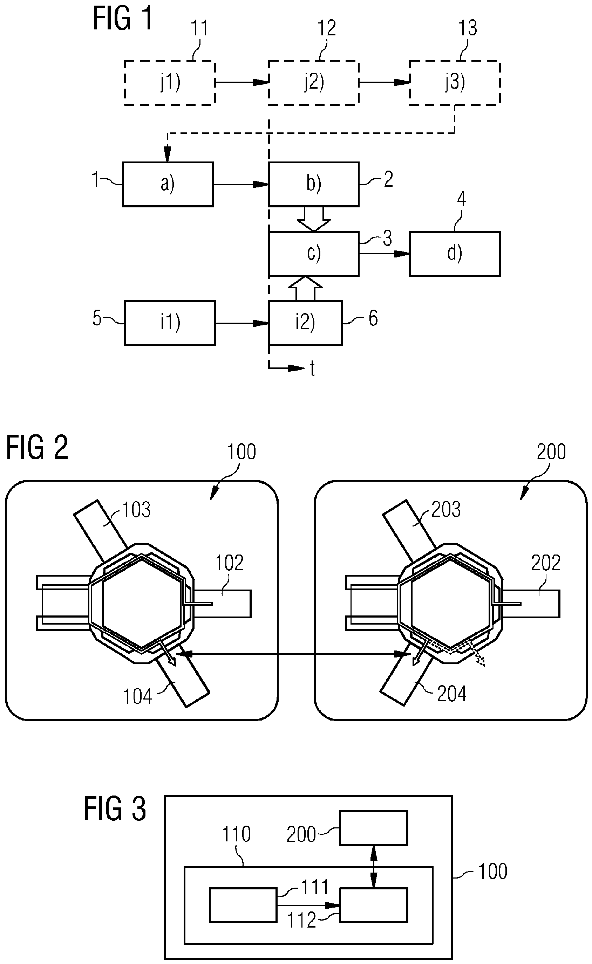

In Fig. 1 ist das Verfahren zum Ermitteln von Abweichungen zwischen einer automatisierten Anlage und einem digitalen Zwilling der automatisierten Anlage schematisch dargestellt. Das Verfahren umfasst die Schritte a) Befestigen 1 einer Sensoreinheit, b) kontinuierliches Aufzeichnen 2 wenigstens einer Messgröße, c) Vergleichen 3, d) Identifizieren 4 eines

Orts, i1) Modellieren 5 einer virtuellen Sensoreinheit und i2) Simulieren 6. Das Verfahren umfasst erfindungsgemäß die initialen Schritte j1) Modellieren 11 einer virtuellen Sensoreinheit, j2) Simulieren 12 und j3) Bereitstellen 13 der Sensoreinheit.

Im Schritt a) wird die Sensoreinheit an einem Prozessgut befestigt. Hier umfasst die Sensoreinheit einen Positionssensor (z. B. in Form von drei Beschleunigungssensoren für die drei Raumrichtungen), einen Temperatursensor (z. B. Pyrometer) und einen Lichtsensor (Photodetektor wie z. B. eine Photodiode). Zudem umfasst die Sensoreinheit eine Speichereinheit (z. B. ein Magnetisches Speichermodul), um aufgezeichnete Messgrößen zwischenzuspeichern, eine Kommunikationseinheit, um aufgezeichnete Messgrößen zu übertragen, und ein Befestigungsmittel in Form eines Permanentmagneten. Das Prozessgut ist hier ein Werkstück in Form eines Blocks aus magnetischem Metall. Die Sensoreinheit wird mittels des Permanentmagneten an dem Werkstück befestigt.

In Schritt b) werden die Messgrößen Position (in drei Raumrichtungen), Temperatur und Lichtintensität von der Sensoreinheit in Echtzeit aufgezeichnet. Dabei werden die Position, Temperatur und Lichtintensität kontinuierlich ermittelt und in dem Speichermodul zwischengespeichert. Somit wird der zeitliche Verlauf der drei Messgrößen aufgezeichnet. Die drei Messgrößen können entweder in Echtzeit durch die Kommunikationseinheit übertragen werden oder es können die zeitlichen Verläufe aus dem Speichermodul nachträglich durch das Kommunikationsmodul übertragen bzw. über diese ausgelesen werden. Die drei Messgrößen Position, Temperatur und Lichtintensität werden kontinuierlich in Echtzeit aufgezeichnet, während sich die Sensoreinheit mit dem Werkstück durch die automatisierte Anlage bewegt.

In Schritt i1) wird eine virtuelle Sensoreinheit an einem virtuellen Prozessgut innerhalb des digitalen Zwillings modelliert. Die virtuelle Sensoreinheit wird so modelliert, dass sie die gleichen (virtuellen) Messgrößen wie die reale Sensoreinheit während einer Simulation des Betriebs der automatisierten Anlage aufzeichnen kann.

Schritt i2) erfolgt zeitgleich mit dem Schritt b), kann jedoch früher oder später enden als dieser (hier beginnt Schritt i2) zeitgleich mit Schritt b) endet jedoch bereits früher). Im Schritt i2) werden die drei entsprechenden simulierten Messgrößen virtuelle Position, virtuelle Temperatur und virtuelle Lichtintensität in Echtzeit simuliert. Dazu werden die drei entsprechenden simulierten Messgrößen kontinuierlich in Echtzeit aufgezeichnet, während sich das virtuelle Prozessgut mit dem virtuellen Sensor durch den digitalen Zwilling bewegt. Hier ist beispielhaft das Prozessieren des virtuellen Prozessguts mit der angebrachten virtuellen Sensoreinheit durch den digitalen Zwilling früher abgeschlossen als das Prozessieren des realen Werkstücks mit der angebrachten realen Sensoreinheit durch die reale automatisierte Anlage.

Schritt c) erfolgt zeitgleich mit den Schritten b) und i2), wobei Schritt c) genauso lange andauert wie der längere der beiden Schritte b) und i2). Hier dauert Schritt c) beispielhaft genauso lange wie Schritt b). In Schritt c) werden die aufgezeichneten Messwerte und die entsprechenden simulierten Messwerte bzw. deren zeitliche Verläufe miteinander in Echtzeit verglichen.

In Schritt d) wird, falls eine Abweichung zwischen den aufgezeichneten Messwerten und den entsprechenden simulierten Messwerten besteht, der Ort, in der automatisierten Anlage, an dem diese Abweichung vorliegt, identifiziert. Dazu wird die Position der realen Sensoreinheit zu dem Zeitpunkt, an dem die Abweichung zwischen der aufgezeichneten Position und der virtuellen Position und/oder zwischen der aufgezeichneten Temperatur und der virtuellen Temperatur und/oder der aufgezeichneten Lichtintensität und der virtuellen Lichtintensität vorliegt, identifiziert. Diese Position der Sensoreinheit entspricht dem gesuchten Ort der Abweichung.

Im Schritt j1) wird um die virtuelle Sensoreinheit in der Simulation eine parametrierbare Sensorgeometrie gelegt. Aufgabe der Sensorgeometrie ist es, im optionalen Schritt j2) bei der Simulation mit dem digitalen Zwilling alle Elemente und/oder deren physikalische Größen zu erkennen, die die Sensorgeometrie beim Durchlaufen berühren bzw. deren physikalische Größen an einer Stelle der Sensorgeometrie erfasst werden. Die resultierenden Stellen an denen die Elemente die Sensorgeometrie berühren und/oder an denen die physikalischen Größen erkannt werden, werden parallel zu den jeweiligen physikalischen Größen aufgezeichnet.

Im Schritt j3) wird die reale Sensoreinheit gemäß den aufgezeichneten Stellen so aufgebaut und bereitgestellt, dass die in der Simulation erkannten physikalischen Größen mit der realen Sensoreinheit in der realen automatisierten Anlage aufgenommen werden können müssten.

In Fig. 2 sind eine reale Spur 101 entlang einer automatisierten Anlage 100 und eine virtuelle Spur 201 entlang eines digitalen Zwillings 200 der automatisierten Anlage 100 schematisch dargestellt. Die reale automatisierte Anlage 100 hat hier die Module 102, 103 und 104. Der digitale Zwilling hat die virtuellen Module 202, 203 und 204.

Die reale Spur 101 als zeitlicher Verlauf wird aus den im Schritt b) aufgenommenen Positionen der realen Sensoreinheit, während diese die automatisierte Anlage 100 durchläuft, generiert. Die virtuelle Spur 201 als zeitlicher Verlauf wird aus den im Schritt i2) simulierten virtuellen Positionen der virtuellen Sensoreinheit, während diese den digitalen Zwilling durchläuft, generiert. Hier weicht das Modul 104 in seiner Anordnung in der automatisierten Anlage 100 von der Anordnung des entsprechenden virtuellen Moduls 204 in dem digitalen Zwilling 200 ab. Die virtuelle Sensoreinheit durchläuft ausgehend vom virtuellen Modul 202 bis zum virtuellen Modul 204 in dem digitalen Zwilling 200 eine kürzere Strecke als die reale Sensoreinheit vom Modul 102 bis zum Modul 104 in der automatisierten Anlage 100. Dies kann daran liegen, dass das Modul 104 in der automatisierten Anlage 100 bei der Installation oder einem Umbau an einer anderen Stelle angeordnet wurde, als ursprünglich im digitalen Zwilling 200 vorgesehen.

Die reale Spur 101 und die virtuelle Spur 201 werden im Schritt c) miteinander verglichen. Die Abweichung in der Anordnung zwischen dem realen Modul 104 in der automatisierten Anlage 100 und dem entsprechenden virtuellen Modul 204 in dem digitalen Zwilling (angedeutet durch die gestrichelte Linie) ist durch den Vergleich der beiden Spuren 101 und 201 sofort ersichtlich. In analoger Weise kann auch eine Abweichung im zeitlichen Verlauf einer anderen aufgenommenen Messgröße erkannt und deren Ort identifiziert werden. Weicht beispielsweise die Temperatur an zwei Orten von der jeweils entsprechenden simulierten virtuellen Temperatur derart ab, dass an dem Ort der ersten Abweichung die Temperatur aufgezeichnet wurde, die am Ort der zweiten Abweichung eigentlich erwartet wurde, und umgekehrt, so wurden wahrscheinlich die beiden Module (z. B. eine erste Wärmebehandlungseinheit und eine zweite Wärmebehandlungseinheit) vertauscht oder anders eingestellt.

In Fig. 3 ist die automatisierte Anlage 100 mit der Vorrichtung 110 zum Ermitteln von Abweichungen zwischen der automatisierten Anlage 100 und einem digitalen Zwilling 200 der automatisierten Anlage 100 schematisch dargestellt. Die Vorrichtung 110 ist ausgestaltet, das Verfahren aus Fig. 1 auszuführen. Die Vorrichtung 110 umfasst dazu eine Sensoreinheit 111 und eine Steuereinheit 112. Die Sensoreinheit 111 ist ausgebildet, an einem Prozessgut, hier einem Werkstück in Form eines Blocks aus magnetischem Metall, befestigt zu werden. Dazu weist die Sensoreinheit 111 eine Befestigungseinrichtung in Form eines Permanentmagneten auf. Ferner ist die Sensoreinheit 111 ausgebildet drei Messgrößen, eine Position in den drei Raumrichtungen, eine Temperatur und eine Lichtintensität, kontinuierlich aufzuzeichnen, während das Prozessgut mit der befestigten Sensoreinheit 111 von der automatisierten Anlage 100 prozessiert wird. Hierzu umfasst die Sensoreinheit 111 drei Beschleunigungssensoren, für jede der Raumrichtung einen, einen Temperatursensor (Pyrometer) und einen Lichtsensor (Photodetektor wie z. B. eine Photodiode). Die Sensoreinheit 111 umfasst ferner eine Kommunikationseinheit, mit der sie die drei aufgezeichneten Messgrößen in Echtzeit an die Steuereinheit 112, beispielsweise über eine Funkverbindung, übertragen kann.

Hier wurde die Sensoreinheit 111 gemäß den Schritten j1)-j3) des Verfahrens aus Fig. 1 bereitgestellt.

Die Steuereinheit 112 ist mit dem digitalen Zwilling 200 und der Sensoreinheit 111 kommunikativ verbunden. Hier ist die Steuereinheit 112 gemeinsam mit dem digitalen Zwilling 200 auf einem Computersystem der automatisierten Anlage implementiert. Die Steuereinheit 112 ist ausgebildet eine virtuelle Sensoreinheit an einem virtuellen Prozessgut innerhalb des digitalen Zwillings 200 zu modellieren und drei entsprechende Messgrößen, eine virtuelle Position, eine virtuelle Temperatur und eine virtuelle Lichtintensität, zu simulieren. Dabei werden die drei entsprechenden Messgrößen durch die virtuelle Sensoreinheit aufgezeichnet, während das virtuelle Prozessgut mit der virtuellen Sensoreinheit von dem digitalen Zwilling 200 prozessiert wird. Die Steuereinheit 112 ist außerdem ausgebildet, einen zeitlichen Verlauf der drei aufgezeichneten Messgrößen (Position, Temperatur, Lichtintensität) mit dem zeitlichen Verlauf der drei entsprechenden simulierten Messgrößen, virtuelle Position, virtuelle Temperatur und virtuelle Lichtintensität, die mit dem digitalen Zwilling 200 simuliert wurden, zu vergleichen. Ferner ist die Steuereinheit 112 ausgebildet einen Ort in der automatisierten Anlage 100 zu identifizieren, an dem eine Abweichung zwischen wenigstens einer der drei aufgezeichneten Messgrößen und der entsprechenden simulierten Messgröße besteht, falls der zeitliche Verlauf wenigstens einer der drei aufgezeichneten Messgrößen von dem zeitlichen Verlauf der entsprechenden simulierten Messgröße abweicht.

Obwohl hier spezifische Ausführungsformen illustriert und beschrieben wurden, ist für den Fachmann ersichtlich, dass es eine Vielzahl von Alternativen und/oder gleichwertigen Implementierungen gibt. Es ist zu würdigen, dass die exemplarischen Ausgestaltungen oder Ausführungsformen nur Beispiele sind und nicht dazu gedacht sind, den Umfang, die Anwendbarkeit oder die Konfiguration in irgendeiner Weise einzuschränken. Vielmehr wird die vorstehende Zusammenfassung und detaillierte Beschreibung dem Fachmann hinreichende Anweisungen für die Umsetzung von mindestens einer bevorzugten Ausführungsform liefern, wobei es sich versteht, dass verschiedene Änderungen in der Funktion und Anordnung der Elemente, die in einer beispielhaften Ausgestaltung beschrieben werden, nicht von dem in den beigefügten Ansprüchen und ihren rechtlichen äquivalenten dargelegten Anwendungsbereich hinausführen. In der Regel ist diese Anmeldung dazu gedacht, alle Anpassungen oder Variationen der hier diskutierten spezifischen Ausführungsformen abzudecken.

In der vorstehenden ausführlichen Beschreibung wurden verschiedene Merkmale in einem oder mehreren Beispielen zusammengefasst, um die Offenbarung knapp zu halten. Es versteht sich, dass die obige Beschreibung illustrativ und nicht restriktiv sein soll. Sie soll alle Alternativen, Änderungen und äquivalente abdecken, die im Rahmen der Erfindung enthalten sein können. Viele andere Beispiele werden einem Fachmann bei dem Studium der obigen Offenbarung offensichtlich werden.

Um ein umfassendes Verständnis der Erfindung zu ermöglichen, wird eine spezifische Nomenklatur verwendet, die in der vorstehenden Offenbarung verwendet wurde. So werden die vorstehenden Beschreibungen spezieller Ausführungsformen der vorliegenden Erfindung zu Illustrations-und Beschreibungszwecken dargestellt.

Die Ausführungsformen wurden ausgewählt und beschrieben, um die Grundsätze der Erfindung und ihre praktischen Anwendungen am besten zu erklären und um somit anderen Fachkräften die Möglichkeit zu geben, die Erfindung und verschiedene Ausführungsformen mit verschiedenen Modifikationen, sowie es für die jeweilige Verwendung geeignet erscheint, am besten anzuwenden. In der gesamten Spezifikation werden die Begriffe "einschließlich" und "in welchem/welcher" als Äquivalente der jeweiligen Begriffe "umfassend" bzw. "worin" verwendet. Darüber hinaus werden die Begriffe "erster/erste/erstes", "zweiter/zweite/zweites", "dritter, dritte, drittes" usw. lediglich als Bezeichnung verwendet und sind nicht dazu gedacht, numerische Anforderungen an die Objekte zu stellen oder eine bestimmte Rangfolge vorzugeben. Im Zusammenhang mit der vorliegenden Beschreibung und den Ansprüchen ist die Verbindung "oder" als Aufnahme ("und/oder") zu verstehen und nicht exklusiv ("entweder... oder").

## Patentansprüche

1. Verfahren zum Ermitteln von Abweichungen zwischen einer automatisierten Anlage (100) und einem digitalen Zwilling (200) der automatisierten Anlage (100), umfassend die Schritte:
a) Befestigen (1) einer Sensoreinheit (111) an einem Prozessgut;
b) kontinuierliches Aufzeichnen (2) wenigstens einer Messgröße durch die Sensoreinheit (111), während das Prozessgut mit der befestigten Sensoreinheit (111) von der automatisierten Anlage (100) prozessiert wird;
c) Vergleichen (3) eines zeitlichen Verlaufs der wenigstens einen aufgezeichneten Messgröße mit einem zeitlichen Verlauf wenigstens einer entsprechenden simulierten Messgröße, die mit dem digitalen Zwilling (200) simuliert wurde; und
d) Identifizieren (4) eines Orts in der automatisierten Anlage (100), an dem eine Abweichung zwischen der wenigstens einen aufgezeichneten Messgröße und der wenigstens einen entsprechenden simulierten Messgröße besteht, falls der zeitliche Verlauf der wenigstens einen aufgezeichneten Messgröße von dem zeitlichen Verlauf der wenigstens einen entsprechenden simulierten Messgröße abweicht, **gekennzeichnet durch** die primären Schritte:
j1) Modellieren (11) einer virtuellen Sensoreinheit an einem virtuellen Prozessgut innerhalb des digitalen Zwillings (200), wobei die virtuelle Sensoreinheit eine parametrierbare Sensorgeometrie aufweist, die eine relative Position einer Stelle, an der eine virtuelle physikalische Größe **durch** die Sensorgeometrie erfasst wurde, aufzeichnet;
j2) Simulieren (12) der wenigstens einen entsprechenden Messgröße, wobei die wenigstens eine entsprechende Messgröße und die relative Position **durch** die virtuelle Sensoreinheit mit der parameterierbaren Sensorgeometrie aufgezeichnet werden, während das virtuelle Prozessgut mit der virtuellen Sensoreinheit von dem digitalen Zwilling (200) prozessiert wird;
j3) Bereitstellen (13) der Sensoreinheit (111) gemäß der aufgezeichneten relativen Positionen.

2. Verfahren gemäß Anspruch 1, wobei wenigstens eine Position der Sensoreinheit (111) als Messgröße durch die Sensoreinheit (111) und
wenigstens eine virtuelle Position der virtuellen Sensoreinheit als entsprechende simulierte Messgröße durch die virtuelle Sensoreinheit aufgezeichnet wird, und wobei der Ort, an dem eine Abweichung zwischen der wenigstens einen aufgezeichneten Messgröße und der wenigstens einen entsprechenden simulierten Messgröße auftritt, durch Auswerten einer Spur (101) der Sensoreinheit (100) basierend auf der aufgezeichneten Position und
einer virtuellen Spur (201) der virtuellen Sensoreinheit basierend auf der simulierten virtuellen Position identifiziert.

3. Verfahren gemäß einem der vorherigen Ansprüche, wobei die Sensoreinheit (111) als Messgröße und
die virtuelle Sensoreinheit als entsprechende simulierte Messgröße eine Temperatur, einen Druck, eine Beschleunigung, eine Geschwindigkeit, eine Lichtintensität, einen Schalldruck und/oder ein Bild aufzeichnet.

4. Vorrichtung (110) zum Ermitteln von Abweichungen zwischen einer automatisierten Anlage (100) und einem digitalen Zwilling (200) der automatisierten Anlage (100), die ausgebildet ist, das Verfahren gemäß Anspruch 1 auszuführen, umfassend:
- eine Sensoreinheit (111), die ausgebildet ist, an einem Prozessgut befestigt zu werden und wenigstens eine Messgröße kontinuierlich aufzuzeichnen, während das Prozessgut mit der befestigten Sensoreinheit (111) von der automatisierten Anlage (100) prozessiert wird;
- eine Steuereinheit (112), die ausgebildet ist, einen zeitlichen Verlauf der wenigstens einen aufgezeichneten Messgröße mit einem zeitlichen Verlauf wenigstens einer entsprechenden simulierten Messgröße, die mit dem digitalen Zwilling (200) simuliert wurde, zu vergleichen und einen Ort in der automatisierten Anlage (100) zu identifizieren, an dem eine Abweichung zwischen der wenigstens einen aufgezeichneten Messgröße und der wenigstens einen entsprechenden simulierten Messgröße besteht, falls der zeitliche Verlauf der wenigstens einen aufgezeichneten Messgröße von dem zeitlichen Verlauf der wenigstens einen entsprechenden simulierten Messgröße abweicht,
**dadurch gekennzeichnet,**
**dass** die Steuereinheit (112) ausgebildet ist, mit dem digitalen Zwilling (200) kommunikativ verbunden zu werden und ferner eine virtuelle Sensoreinheit an einem virtuellen Prozessgut innerhalb des digitalen Zwillings (200) zu modellieren und die wenigstens eine entsprechende Messgröße zu simulieren, wobei die wenigstens eine entsprechende Messgröße durch die virtuelle Sensoreinheit aufgezeichnet wird, während das virtuelle Prozessgut mit der virtuellen Sensoreinheit von dem digitalen Zwilling (200) prozessiert wird, und
wobei die Sensoreinheit gemäß den Schritten j1) bis j3) des Verfahrens gemäß Anspruch 1 bereitgestellt wurde.

5. Vorrichtung (110) gemäß Anspruch 4, die ferner ausgebildet ist, das Verfahren gemäß Anspruch 2 auszuführen, wobei die Sensoreinheit (111) ausgebildet ist, eine Position der Sensoreinheit (111) als Messgröße aufzuzeichnen.

6. Vorrichtung (110) gemäß Anspruch 4, die ferner ausgebildet ist, das Verfahren gemäß Anspruch 2 auszuführen, wobei die Sensoreinheit (111) mit der Steuereinheit (112) kommunikativ verbunden ist und ausgebildet ist, die aufgezeichnete virtuelle physikalische Größe in Echtzeit an die Steuereinheit (112) zu übertragen.

7. Vorrichtung (110) gemäß einem der Ansprüche 4 bis 6, die ferner ausgestaltet ist, das Verfahren gemäß Anspruch 3 auszuführen, wobei die Sensoreinheit (111) ausgebildet ist, eine Temperatur, einen Druck, eine Beschleunigung, eine Geschwindigkeit, eine Lichtintensität, einen Schalldruck und/oder ein Bild als Messgröße aufzuzeichnen.

8. Automatisierte (100) Anlage umfassend die Vorrichtung (110) gemäß einem der Ansprüche 4 bis 7.

## Claims

1. Method for determining differences between an automated installation (100) and a digital twin (200) of the automated installation (100), comprising the steps of:
a) fastening (1) a sensor unit (111) to a process material;
b) continuously recording (2) at least one measurement variable by means of the sensor unit (111) while the process material with the fastened sensor unit (111) is processed by the automated installation (100);
c) comparing (3) a temporal profile of the at least one recorded measurement variable with a temporal profile of at least one corresponding simulated measurement variable which was simulated using the digital twin (200); and
d) identifying (4) a location in the automated installation (100) at which there is a difference between the at least one recorded measurement variable and the at least one corresponding simulated measurement variable if the temporal profile of the at least one recorded measurement variable differs from the temporal profile of the at least one corresponding simulated measurement variable, **characterized by** the primary steps of:
j1) modeling (11) a virtual sensor unit on a virtual process material inside the digital twin (200), wherein the virtual sensor unit has a parameterizable sensor geometry which records a relative position of a location at which a virtual physical variable was captured by the sensor geometry;
j2) simulating (12) the at least one corresponding measurement variable, wherein the at least one corresponding measurement variable and the relative position are recorded by the virtual sensor unit having the parameterizable sensor geometry while the virtual process material with the virtual sensor unit is processed by the digital twin (200);
j3) providing (13) the sensor unit (111) according to the recorded relative positions.

2. Method according to Claim 1, wherein at least one position of the sensor unit (111) is recorded as a measurement variable by the sensor unit (111), and at least one virtual position of the virtual sensor unit is recorded as the corresponding simulated measurement variable by the virtual sensor unit, and wherein the location at which a difference occurs between the at least one recorded measurement variable and the at least one corresponding simulated measurement variable is identified by evaluating a track (101) of the sensor unit (100) on the basis of the recorded position and a virtual track (201) of the virtual sensor unit on the basis of the simulated virtual position.

3. Method according to either of the preceding claims, wherein the sensor unit (111) records, as a measurement variable, and the virtual sensor unit records, as a corresponding simulated measurement variable, a temperature, a pressure, an acceleration, a speed, a light intensity, a sound pressure and/or an image.

4. Apparatus (110) for determining differences between an automated installation (100) and a digital twin (200) of the automated installation (100), which is designed to carry out the method according to Claim 1, comprising:
- a sensor unit (111) which is designed to be fastened to a process material and to continuously record at least one measurement variable while the process material with the fastened sensor unit (111) is processed by the automated installation (100);
- a control unit (112) which is designed to compare a temporal profile of the at least one recorded measurement variable with a temporal profile of at least one corresponding simulated measurement variable which was simulated using the digital twin (200) and to identify a location in the automated installation (100) at which there is a difference between the at least one recorded measurement variable and the at least one corresponding simulated measurement variable if the temporal profile of the at least one recorded measurement variable differs from the temporal profile of the at least one corresponding simulated measurement variable,
**characterized**
**in that** the control unit (112) is designed to be communicatively connected to the digital twin (200) and also to model a virtual sensor unit on a virtual process material inside the digital twin (200) and to simulate the at least one corresponding measurement variable, wherein the at least one corresponding measurement variable is recorded by the virtual sensor unit while the virtual process material with the virtual sensor unit is processed by the digital twin (200), and wherein the sensor unit was provided according to steps j1) to j3) of the method according to Claim 1.

5. Apparatus (110) according to Claim 4, which is also designed to carry out the method according to Claim 2, wherein the sensor unit (111) is designed to record a position of the sensor unit (111) as a measurement variable.

6. Apparatus (110) according to Claim 4, which is also designed to carry out the method according to Claim 2, wherein the sensor unit (111) is communicatively connected to the control unit (112) and is designed to transmit the recorded virtual physical variable to the control unit (112) in real time.

7. Apparatus (110) according to one of Claims 4 to 6, which is also configured to carry out the method according to Claim 3, wherein the sensor unit (111) is designed to record a temperature, a pressure, an acceleration, a speed, a light intensity, a sound pressure and/or an image as a measurement variable.

8. Automated installation (100) comprising the apparatus (110) according to one of Claims 4 to 7.

## Revendications

1. Procédé de détermination d'écarts entre une installation (100) automatisée et un double (200) numérique de l'installation (100) automatisée, comprenant les stades :
a) on fixe (1) une unité (111) formant capteur à un produit traité ;
b) on enregistre (2) en continu, au moins une grandeur de mesure par l'unité (111) formant capteur, tandis le produit traité est traité par l'installation (100) automatisée, alors que l'unité (111) formant capteur est fixée ;
c) on compare (3) une courbe en fonction temps de la au moins une grandeur de mesure enregistrée à une courbe en fonction du temps d'au moins une grandeur de mesure simulée correspondante, qui a été simulée par le double (200) numérique ; et
d) on identifie (4) un emplacement dans l'installation (100) automatisée, où il y a un écart entre la au moins une grandeur de mesure enregistrée et la au moins une grandeur de mesure simulée de manière correspondante, si la courbe en fonction du temps de la au moins une grandeur de mesure enregistrée s'écarte de la courbe en fonction du temps de la au moins une grandeur de mesure simulée correspondante,
**caractérisé par** les stades primaires :
j1) on modélise (11) une unité virtuelle formant capteur sur un produit de traitement virtuel au sein du double (200) numérique, l'unité virtuelle formant capteur ayant une géométrie de capteur paramétrable, qui caractérise une position relative d'un point où une grandeur physique virtuelle a été relevée par la géométrie du capteur ;
j2) on simule (12) la au moins une grandeur de mesure correspondante, la au moins une mesure de grandeur correspondante à la position relative étant enregistrée par l'unité virtuelle formant capteur avec la géométrie de capteur paramétrable, tandis que l'on traite le produit de traitement virtuel ayant l'unité virtuelle de capteur par le double (200) numérique ;
j3) on met (13) à disposition, l'unité (111) formant capteur suivant les positions relatives enregistrées.

2. Procédé suivant la revendication 1, dans lequel on enregistre au moins une position de l'unité (111) formant capteur comme grandeur de mesure par l'unité (111) formant capteur et au moins une position virtuelle de l'unité virtuelle formant capteur comme grandeur de mesure simulée de manière correspondante par l'unité virtuelle formant capteur, et dans lequel on identifie l'emplacement où se produit un écart entre la au moins une grandeur de mesure enregistrée et la au moins une grandeur de mesure simulée de manière correspondante, par exploitation d'une trace (101) de l'unité (100) formant capteur, sur la base de la position enregistrée et d'une trace (201) virtuelle de l'unité virtuelle formant capteur sur la base de la position virtuelle simulée.

3. Procédé suivant l'une des revendications précédentes, dans lequel l'unité (111) formant capteur enregistre comme grandeur de mesure et l'unité virtuelle formant capteur enregistre comme grandeur de mesure simulée correspondante, une température, une pression, une accélération, une vitesse, une intensité de la lumière, une pression acoustique et/ou une image.

4. Installation (110) de détermination d'écarts entre une installation (100) automatisée et un double (200) de numérique de l'installation (100) automatisée, qui est constituée pour exécuter le procédé suivant la revendication 1, comprenant :
- une unité (111) formant capteur, qui est constituée pour être fixée à un produit en traitement et pour enregistrer en continu au moins une grandeur de mesure, pendant que l'on traite par l'installation (100) automatisée le produit en traitement ayant l'unité (111) formant capteur fixée ;
- une unité (112) de commande, qui est constituée pour comparer une courbe en fonction du temps d'au moins une grandeur de mesure enregistrée à une courbe en fonction du temps d'au moins une grandeur de mesure simulée correspondante, qui a été simulée par le double (200) numérique, et pour identifier un emplacement dans l'installation (100) automatisée, où il y a un écart entre la au moins une grandeur de mesure enregistrée et la au moins une grandeur de mesure simulée correspondante, si la courbe en fonction du temps de la au moins une grandeur de mesure enregistrée s'écarte de la courbe en fonction du temps de la au moins une grandeur de mesure simulée correspondante, **caractérisée**
**en ce que** l'unité (112) de commande est constituée pour être reliée en communication au double (200) numérique et en outre pour modéliser une unité virtuelle formant capteur sur un produit virtuel en traitement au sein du double (200) numérique et pour simuler la au moins une grandeur de mesure correspondante, la au moins une grandeur de mesure correspondante étant enregistrée par l'unité virtuelle formant capteur, pendant que l'on traite, par le double (200) numérique, le produit virtuel en traitement ayant l'unité virtuelle formant capteur, et
dans laquelle l'unité formant capteur a été mise à disposition suivant les stades j1) à j3) du procédé suivant la revendication 1.

5. Installation (110) suivant la revendication 4, qui est constituée en outre pour exécuter le procédé suivant la revendication 2, l'unité (111) formant capteur étant constituée pour enregistrer comme grandeur de mesure une position de l'unité (111) formant capteur.

6. Installation (110) suivant la revendication 4, qui est constituée en outre pour exécuter le procédé suivant la revendication 2, l'unité (111) formant capteur étant reliée en communication à l'unité (112) de commande et étant constituée pour transmettre la grandeur physique virtuelle enregistrée en temps réel à l'unité (112) de commande.

7. Installation (110) suivant l'une des revendications 4 à 6, conformée en outre pour exécuter le procédé suivant la revendication 3, l'unité (111) formant capteur étant constituée pour enregistrer, comme grandeur de mesure, une température, une pression, une accélération, une vitesse, une intensité de la lumière, une pression acoustique et/ou une image.

8. Installation automatisée (100) comprenant l'installation (110) suivant l'une des revendications 4 à 7.
